# EUROPÄISCHE PATENTANMELDUNG

(11) **EP 4 570 759 A1**
(43) Veröffentlichungstag der Anmeldung: **18.06.2025**
(21) Anmeldenummer: 23020548.6
(22) Anmeldetag: 13.12.2023
(51) Int. Cl.: C01C 1/04, C25B 1/04, F25J 3/04, C01B 3/50

(54) **VERFAHREN UND ANLAGE ZUR HERSTELLUNG EINES VERFAHRENSPRODUKTS**

(71) Anmelder: Linde GmbH, 82049 Pullach (DE)
(72) Erfinder: Heinzel, Albrecht, 82049 Pullach (DE); Schwarzhuber, Josef, 82049 Pullach (DE); Reinke, Michael, 82049 Pullach (DE)
(74) Vertreter: Fischer, Werner

(57) **Zusammenfassung**

Es wird ein Verfahren (100) zur Herstellung eines Verfahrensprodukts (15) vorgeschlagen, bei dem ein erster Eduktstrom (11) und ein zweiter Eduktstrom (12) einem Reaktor (130) zugeführt und in dem Reaktor (130) in einer exothermen Reaktion zu einem das Verfahrensprodukt (15) enthaltenden Rohprodukt (13) umgesetzt werden, wobei das Rohprodukt (13) unter zumindest teilweiser Kondensation einer Kühlung (140) gegen ein Kältemittel (141, 142) unterworfen wird, und wobei das Verfahrensprodukt (15) unter Verwendung des zumindest teilweise kondensierten Rohprodukts (14) gebildet wird. Es ist vorgesehen, dass der erste (11) und/oder der zweite (12) Eduktstrom unter Verwendung einer Vorkühlung (120) gegen das für die Kühlung (140) des Rohprodukts (13) verwendete Kältemittel (141, 142) und/oder das zumindest teilweise kondensierte Rohprodukt (14) gebildet wird. Eine entsprechende Anlage wird ebenfalls vorgeschlagen.

## Beschreibung

Die Erfindung betrifft ein Verfahren und eine Anlage zur Herstellung eines Verfahrensprodukts, insbesondere von Ammoniak.

### Hintergrund

Bei der typischen Herstellung von Ammoniak werden elementarer Stickstoff und elementarer Wasserstoff miteinander zur Reaktion gebracht. Dabei wird zunächst gasförmiger Ammoniak gewonnen, der unter Verwendung einer Produktkühlung zu einem zumindest teilweise verflüssigten Verfahrensprodukt aufbereitet wird.

Je nach verwendeter Herstellungsmethode für die beiden Edukte Wasserstoff und Stickstoff, wird im Rahmen von deren Bereitstellung eine Kühlung vorgenommen. Typischerweise sind derartige Kühlungen für den jeweiligen Einsatzzweck dediziert ausgelegt, insbesondere im Hinblick auf die aufzunehmenden Wärmeströme und/oder die angestrebten Temperaturniveaus.

Auch wenn die vorgeschlagenen Maßnahmen im Folgenden insbesondere unter Verweis auf das Anwendungsbeispiel einer Herstellung von Ammoniak beschrieben wird, ist die Erfindung an sich, wie auch nachfolgend noch dargelegt, nicht auf die Herstellung von Ammoniak beschränkt und kann auch im Rahmen einer Herstellung eines anderen Verfahrensprodukts nutzbringend eingesetzt werden.

Es besteht weiterhin der Bedarf nach Verbesserungen bei entsprechenden Verfahren, insbesondere, aber nicht ausschließlich, hinsichtlich der Energieeffizienz und Vereinfachungen in der baulichen Realisierung.

### Überblick

Vor diesem Hintergrund werden ein Verfahren und eine Anlage mit den Merkmalen der unabhängigen Ansprüche vorgeschlagen, die den Umfang der vorliegenden Erfindung definieren. Vorteilhafte Weiterbildungen und weitere Ausgestaltungen sind Gegenstand der Unteransprüche sowie der nachfolgenden Beschreibung.

Das vorgeschlagene Verfahren bedient sich einer Integration bezüglich des Aufbringens von Kühlleistung, indem ein ohnehin für die Kühlung des Produkts einer chemischen Umsetzung eines ersten Eduktstroms mit einem zweiten Eduktstrom verwendetes Kältemittel oder ein zumindest teilweise kondensiertes Produkt auch für eine im Rahmen einer Bereitstellung zumindest eines Eduktstroms des Verfahrens vorgenommene Vorkühlung verwendet wird.

Im Einzelnen wird ein Verfahren zur Herstellung eines Verfahrensprodukts vorgeschlagen, bei dem ein erster Eduktstrom und ein zweiter Eduktstrom einem Reaktor zugeführt und in dem Reaktor in einer exothermen Reaktion zu einem das Verfahrensprodukt enthaltenden Rohprodukt umgesetzt werden, wobei das Rohprodukt unter zumindest teilweiser Kondensation einer Kühlung gegen ein Kältemittel unterworfen wird und das Verfahrensprodukt unter Verwendung des zumindest teilweise kondensierten Rohprodukts gebildet wird.

Hierbei wird vorgeschlagen, dass der erste Eduktstrom und/oder der zweite Eduktstrom unter Verwendung einer Vorkühlung gegen das für die Kühlung des Rohprodukts verwendete Kältemittel und/oder gegen das zumindest teilweise kondensierte Rohprodukt gebildet wird.

Durch die Integration mehrerer Kältemittelverbraucher können die Investitionskosten einerseits dadurch gesenkt werden, dass eine einzige Kältemittelanlage für mehrere Zwecke verwendet werden kann und somit ganze Anlagenteile eingespart werden können. Andererseits wird durch das typischerweiser sehr niedrige Temperaturniveau entsprechender Produktkühlungen die Reinheit der Vorstufe des jeweiligen Eduktstroms erhöht und/oder die Effizienz des zur Bereitstellung des jeweiligen Eduktstroms verwendeten Verfahrens gesteigert. Dies kann dazu beitragen, zusätzlich Kosten zu senken, indem eine vorgeschaltete Reinigungseinheit kleiner dimensioniert werden kann und der Energieaufwand veringert wird.

In zumindest einer Ausgestaltung enthält der erste Eduktstrom Wasserstoff. Dies ist ein besonders häufig verwendeter Eduktstrom, der insbesondere im Rahmen der Dekarbonisierung der Weltwirtschaft zunehmend an Bedeutung gewinnt. Der Wasserstoff kann insbesondere zumindest teilweise mittels Elektrolyse von Wasser und/oder zumindest teilweise aus einem kohlenwasserstoffhaltigen Ausgangsstoff und/oder zumindest teilweise aus einem elementaren Wasserstoff enthaltenden Einsatz hergestellt werden. Dies sind besonders relevante Wasserstoffquellen, die im Rahmen des Übergangs auf eine Wirtschaft, die auf erneuerbaren Energieträgern beruht, Anwendung finden können.

Der Wasserstoff kann insbesondere stromauf des Reaktors unter Verwendung einer Adsorption, insbesondere einer Druckwechseladsorption und/oder einer Temperaturwechseladsorption und/oder einer Vakuum-Druckwechseladsorption und/oder unter Verwendung eines Membranverfahrens und/oder destillativ gereinigt werden. Im Rahmen von einigen dieser Reinigungsverfahren kann die bereits erläuterte Kälteintegration vorteilhaft zum Einsatz kommen.

In zumindest einer Ausgestaltung enthält der zweite Eduktstrom Stickstoff, insbesondere zumindest teilweise mittels destillativer (Tieftemperatur-)Trennung von Luft hergestellten Stickstoff. Stickstoff ist eines der wichtigsten im Rahmen der chemischen Industrie verwendeten Elemente und kommt in der Luft zu einem hohen Anteil in elementarer Form vor. Andere Stickstoffvorkommen sind typischerweise deutlich schlechter verfügbar bzw. nicht ausreichend erneuerbar, so dass sowohl aus Nachhaltigkeits- als auch aus Kostengründen typischerweise aus Luft gewonnener Stickstoff verwendet wird. Im Rahmen der Bereitstellung von Stickstoff kann die beschriebene Kälteintegration Anwendung finden.

Gemäß zumindest einer hier vorgeschlagenen Ausgestaltung umfasst das Verfahrensprodukt Ammoniak. Dies ist eine der wichtigsten chemischen Verbindungen, die in großindustriellem Maßstab hergestellt wird und Ausgangsstoff für eine Vielzahl weiterer chemischer Umsetzungen ist.

In zumindest einer Ausgestaltung wird das Kältemittel zumindest teilweise unter Verwendung des Verfahrensprodukts gebildet. Dies ist besonders vorteilhaft, da somit Querkontaminationen zwischen Produkt und Kältemittel ausgeschlossen sind. Es kann damit ein offener Kältemittelkreislauf verwendet werden. In anderen Ausgestaltungen ist aber auch die Verwendung geschlossener Kältemittelkreisläufe möglich.

Die erfindungsgemäße Anlage zur Herstellung eines Verfahrensprodukts umfasst einen Reaktor, eine Kühlung und eine Vorkühlung, und kann dazu eingerichtet sein, ein wie soeben beschriebenes Verfahren in irgendeinder der vorgeschlagenen Ausgestaltungen durchzuführen. Damit profitiert die Anlage von den bereits in Bezug auf Ausgestaltungen des erfindungsgemäßen Verfahrens beschriebenen Vorteilen in sinngemäß entsprechender Weise.

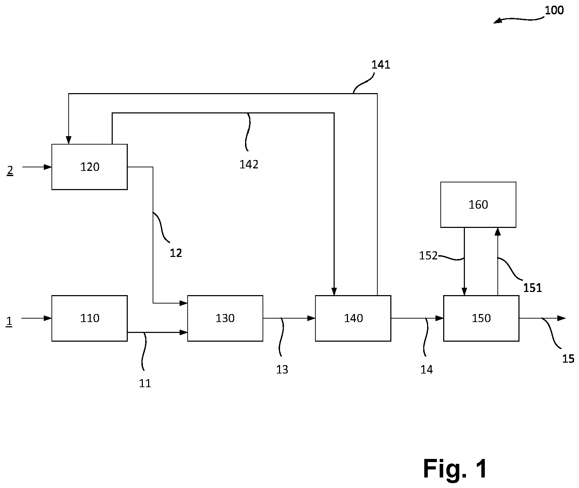

Weitere Ausgestaltungen und Vorteile der Erfindung werden im Folgenden unter Bezugnahme auf die beigefügte Zeichnung anhand eines Ausführungsbeispiels erläutert. Dabei zeigt
Figur 1 schematisch eine Ausgestaltung der Erfindung in Form eines vereinfachten Blockdiagramms.

### Ausgestaltungen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich Beispiele dar und sollen hinsichtlich der Merkmale der Erfindung nicht abschließend und/oder beschränkend verstanden werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er, wie zuvor erwähnt, in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Verfahren zur Herstellung von Wasserstoff, die im Zusammenhang mit der vorliegenden Erfindung zum Einsatz kommen können, sind vielfach in der Literatur beschrieben. Statt vieler sei in diesem Zusammenhang beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Die Herstellung von Wasserstoff mittels Wasserelektrolyse ist ebenfalls hinreichend bekannt und beispielsweise in dem Artikel "Hydrogen" in Ullmann's Encyclopedia of Industrial Chemistry, Wiley-VCH, 15. Juni 2000, DOI: 10.1002/14356007.a13_297, insbesondere in Abschnitt 4.2, "Electrolysis", beschrieben.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), bei der das zu elektrolysierende Wasser an der Anodenseite bereitgestellt wird. Auch die Elektrolyse unter Verwendung von Anionenaustauschermembranen (AEM, Anion Exchange Membrane) ist bekannt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide anderer seltener Erden, die bei hohen Temperaturen mehr leitfähig werden.

Der Begriff der Elektrolyse soll nachfolgend sämtliche dieser Verfahren umfassen. Insbesondere die Niedertemperaturelektrolyse (PEM, AEL, AEM) eignet sich für einen flexiblen Betrieb, der den Energieübergang zu erneuerbaren Energien unterstützt. Sämtliche Verfahren können in den hier vorgeschlagenen Verfahren und entsprechenden Ausgestaltungen eingesetzt werden.

Die Ammoniakproduktion ist ebenfalls, beispielsweise bei M. Appl, "Ammonia: Principles and Industrial Practice", Wiley-VCH, 1999, vorbeschrieben. Es werden typischerweise Varianten des Haber-Bosch-Verfahrens eingesetzt. Der dabei produzierte Ammoniak wird typischerweise bei atmosphärischem Druck und einer Temperatur von -33°C gelagert. Um den Ammoniak bei diesen Bedingungen als flüssiges Produkt zu generieren, kommt typischerweise eine Kälteanlage zur Kondensation als auch zur Aufreinigung des Ammoniakes zum Einsatz, wie auch bereits zuvor diskutiert und nachfolgend erläutert.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff) ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Adsorbieren, Absorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Wie erwähnt, können in den hier vorgeschlagenen Ausgestaltungen geschlossene und/oder oder offene Kältemittelkreisläufe zum Einsatz kommen. Ein offener Kältemittelkreislauf zeichnet sich dabei dadurch aus, dass ein Teil eines Verfahrensprodukts, beispielsweise von in einer Ammoniaksynthese gebildetem Ammoniak, abgeschieden, entspannt, dadurch verdampft, und als Kältemittel verwendet wird, und dass das entsprechende Verfahrensprodukt, beispielsweise der Ammoniak, danach in ein Produkt überführt wird. Ein Kältemittel in einem geschlossenen Kältemittelkreislauf hat dabei keinen stofflichen Kontakt mit dem Prozessgas, z.B. dem abzukühlenden Gasgemisch aus der Ammoniaksynthese.

In Figur 1 ist eine Ausgestaltung der Erfindung schematisch in Form eines vereinfachten Blockdiagramms dargestellt und insgesamt mit 100 bezeichnet.

Das Blockdiagramm kann dabei sowohl als Ablaufdiagramm einer Ausgestaltung eines erfindungsgemäßen Verfahrens, als auch als Funktionsdiagramm einer Ausgestaltung einer erfindungsgemäßen Anlage interpretiert werden. Bezugnahmen auf Verfahrensschritte beziehen sich daher, wie erwähnt, jeweils (auch) auf entsprechende Anlagenkomponenten, die zur Durchführung eines solchen Verfahrensschrittes eingerichtet sind, und umgekehrt, auch wenn dies nicht an jeder Stelle explizit zum Ausdruck gebracht wird.

Die Erfindung wird am Beispiel einer Anlage zur Herstellung von Ammoniak als das Verfahrensprodukt erläutert, wobei jedoch auch Ausgestaltungen der Erfindung vorgesehen sind, durch die andere und/oder weitere Verfahrensprodukte hergestellt werden. Die Beschreibung eines Verfahrens zur Herstellung von Ammoniak ist daher rein beispielhaft zu verstehen und beschränkt die Erfindung nicht auf einen engeren Anwendungsbereich als er durch die Patentansprüche definiert ist.

Die Anlage 100 umfasst einen Reaktor 130, dem in dem hier gezeigten Beispiel ein erster Eduktstrom 11, hier Wasserstoff, und ein zweiter Eduktstrom 12, hier Stickstoff, zugeführt wird und der dazu eingerichtet ist, den ersten 11 und den zweiten 12 Eduktstrom in einer exothermen Reaktion zumindest teilweise miteinander zu einem Rohprodukt 13, hier einem zumindest Ammoniak enthaltenden Fluidstrom, umzusetzen. Der Wasserstoff 11 und Stickstoff 12 können auch (abweichend von der Darstellung in Figur 1) bereits vor dem Reaktor 130 miteinander vermischt werden und als gemeinsamer Einsatzstrom in den Reaktor 130 geführt werden.

Der Wasserstoff 11 wird in dem gezeigten Beispiel in einer Elektrolyse 110 stromauf des Reaktors 130 aus Wasser 1 gebildet. Im Rahmen der Erfindung können jedoch auch andere Quellen für den ersten Eduktstrom 11 verwendet werden.

Der Stickstoff 12 wird in dem hier gezeigten Beispiel unter Verwendung einer Luftzerlegungsanlage, die eine Vorkühlung 120 umfasst, also destillativ gewonnen. Dazu wird Luft 2 vorgekühlt, insbesondere um Verunreinigungen (z.B. Kohlenwasserstoffe) und Wasserdampf (Luftfeuchtigkeit) zu entfernen. Typischerweise wird die Luft 2 stromab der Vorkühlung 120, insbesondere unter Verwendung einer Adsorptionsanlage (nicht in Figur 1 gezeigt) gereinigt, bevor die Luft in an sich bekannter Weise destillativ in ihre elementaren Bestandteile (insbesondere Sauerstoff, Argon und Stickstoff 12) aufgetrennt wird. Stickstoff, der nicht als der zweite Eduktstrom 12 benötigt wird, sowie weitere Luftbestandteile wie Sauerstoff und Argon können als weitere Produkte des Verfahrens 100 abgegeben werden, was in Figur 1 jedoch nicht gesondert dargestellt ist.

Das Rohprodukt 13 wird stromab des Reaktors 130 einer Kühlung 140 unterworfen, wobei zumindest ein Teil des in dem Rohprodukt 13 enthaltenen Ammoniaks kondensiert. Dazu wird ein Kältemittel 141, 142 eingesetzt, das insbesondere zumindest teilweise aus dem produzierten Ammoniak gebildet sein kann. Das Kältemittel 141 kann bei der Wärmeaufnahme teilweise oder vollständig verdampfen (entspanntes, warmes Kältemittel 142) und mittels eines Kältemittelverdichters und eines Wärmetauschers (nicht in Figur 1 dargestellt) gegen ein externes Kühlmittel bei erhöhtem Druck und Temperatur wieder verflüssigt (kaltes flüssiges Kältemittel 141) werden. Das in der Produktkühlung 140 verwendete Kältemittel 141 wird auch zur Vorkühlung 120 der Luft für die Luftzerlegungsanlage und/oder im Rahmen der Bereitstellung 110 des Wasserstoffs 11 verwendet. Insbesondere in Ausgestaltungen, in denen der Wasserstoff 11 bei kryogenen Temperaturen aufgereinigt wird, ist eine solche Kälteintegration vorteilhaft.

Stromab der Produktkühlung 140 kann flüssiger Ammoniak 14 in einem Produktspeicher 150 zwischengespeichert oder direkt als Verfahrensprodukt 15 abgegeben werden. Im Falle einer Zwischenspeicherung 150 kann dabei verdampfender Ammoniakdampf 151 unter Verwendung einer Lagerkühlung 160 wieder rückverflüssigt werden und als Rücklaufstrom 152 zurück in den Produktspeicher 150 geleitet werden. In Ausgestaltungen der Erfindung kann für diese Rückverflüssigung ebenfalls das Kältemittel 141, 142 der Produktkühlung 140 verwendet werden. Alternativ kann die Rückverflüssigung 160 direkt in der Produktverflüssigung 140 integriert sein. Dazu kann beispielsweise der Ammoniakdampf 151 stromauf der Produktverflüssigung in einem Zwischenschritt der Produktkühlung 140 in den Rohprodutstrom 14 zurückgeführt werden (in Figur 1 nicht gesondert dargestellt).

Umgekehrt kann in alternativen Ausgestaltungen der Erfindung auch das für die Rückverflüssigung 160 verwendete Kältemittel als das Kältemittel 141, 142 für die Vorkühlung 120 und/oder für die Produktkühlung 140 und/oder im Rahmen der Bereitstellung 110 des ersten Eduktstroms 11 verwendet werden.

## Patentansprüche

1. Verfahren (100) zur Herstellung eines Verfahrensprodukts (15), bei dem ein erster Eduktstrom (11) und ein zweiter Eduktstrom (12) einem Reaktor (130) zugeführt und in dem Reaktor (130) in einer exothermen Reaktion zu einem das Verfahrensprodukt (15) enthaltenden Rohprodukt (13) umgesetzt werden, wobei das Rohprodukt (13) unter zumindest teilweiser Kondensation einer Kühlung (140) gegen ein Kältemittel (141, 142) unterworfen wird, und wobei das Verfahrensprodukt (15) unter Verwendung zumindest eines Teils des kondensierten Rohprodukts (14) gebildet wird, **dadurch gekennzeichnet, dass** der erste (11) und/oder der zweite (12) Eduktstrom unter Verwendung einer Vorkühlung (120) gegen das für die Kühlung (140) des Rohprodukts (13) verwendete Kältemittel (141, 142) und/oder das zumindest teilweise kondensierte Rohprodukt (14) gebildet wird.

2. Verfahren (100) nach Anspruch 1, wobei der erste Eduktstrom (11) Wasserstoff enthält.

3. Verfahren nach Anspruch 2, wobei der Wasserstoff zumindest teilweise mittels Elektrolyse (110) von Wasser (1) und/oder zumindest teilweise aus einem kohlenwasserstoffhaltigen Ausgangsstoff (1) und/oder zumindest teilweise aus einem elementaren Wasserstoff enthaltenden Einsatz (1) hergestellt wird.

4. Verfahren (100) nach Anspruch 2 oder 3, wobei der Wasserstoff stromauf des Reaktors (130) unter Verwendung einer Adsorption, insbesondere einer Druckwechseladsorption und/oder einer Temperaturwechseladsorption und/oder einer Vakuum-Druckwechseladsorption, und/oder unter Verwendung eines Membranverfahrens und/oder destillativ gereinigt wird.

5. Verfahren nach einem der vorstehenden Ansprüche, wobei zweite Eduktstrom (12) Stickstoff, insbesondere zumindest teilweise mittels destillativer Trennung (120) von Luft (2) hergestellten Stickstoff, enthält.

6. Verfahren (100) nach einem der vorstehenden Ansprüche, wobei das Verfahrensprodukt (15) Ammoniak umfasst.

7. Verfahren (100) nach einem der vorstehenden Ansprüche, wobei das Kältemittel (141, 142) zumindest teilweise unter Verwendung des Verfahrensprodukts (15) gebildet wird.

8. Anlage zur Herstellung eines Verfahrensprodukts mit einem Reaktor (130), einer Kühlung (140) und einer Vorkühlung (120), wobei die Anlage dazu eingerichtet ist, einen ersten Eduktstrom (11) und einen zweiten Eduktstrom (12) dem Reaktor (130) zuzuführen und in dem Reaktor (130) in einer exothermen Reaktion zu einem das Verfahrensprodukt (15) enthaltenden Rohprodukt (13) umzusetzen, wobei die Anlage ferner dazu eingerichtet ist, das Rohprodukt (13) unter zumindest teilweiser Kondensation einer Kühlung (140) gegen ein Kältemittel (141, 142) zu unterwerfen und das Verfahrensprodukt (15) unter Verwendung des zumindest teilweise kondensierten Rohprodukts (14) zu bilden, **dadurch gekennzeichnet, dass** die Anlage dazu eingerichtet ist, den ersten (11) und/oder den zweiten (12) Eduktstrom unter Verwendung einer Vorkühlung (120) gegen das für die Kühlung (140) des Rohprodukts (13) verwendete Kältemittel (141, 142) und/oder das zumindest teilweise kondensierte Rohprodukt (14) zu bilden.

9. Anlage nach Anspruch 8, die dafür eingerichtet ist, ein Verfahren nach einem der Ansprüche 1 bis 7 durchzuführen.
